# EUROPEAN PATENT SPECIFICATION

(11) **EP 2 139 277 B1**
(45) Date of publication and mention of the grant of the patent: **08.08.2012**
(21) Application number: 09251511.3
(22) Date of filing: 08.06.2009
(51) Int. Cl.: H04W 24/08

(54) **Method and system for detecting insufficient coverage location in mobile network**
Verfahren und System zum Erkennen des unzureichenden Netzabdeckungsstandorts in einem mobilen Netzwerk
Procédé et système pour détecter les positions où la couverture d'un réseau mobile est insuffisante

(30) Priority: 23.06.2008 US 132711 P; 15.09.2008 US 191954 P
(43) Date of publication of application: 30.12.2009
(73) Proprietor: Groundhog Technologies Inc., Cambridge, MA 02142 (US)
(72) Inventor: Chang, Chao-Chi, Jhushan Township Nantou County 557 (TW); Chiou, Ta Gang, Da-an District Taipei City 106 (TW); Lin, Ching-Hsuan, Zhongzheng Dist Taipei City 100 (TW)
(74) Representative: Wallin, Nicholas James

(56) References cited:
- EP-A- 1 601 218
- EP-A- 1 711 025
- US-A1- 2007 099 561
- US-A1- 2007 189 272
- US-A1- 2007 243 864

## Description

### BACKGROUND OF INVENTION

### 1. FIELD OF THE INVENTION

The present invention relates to mobile networks, and more particularly to a method and system for detecting an insufficient coverage location in a mobile network.

### 2. DESCRIPTION OF THE PRIOR ART

In a mobile network, insufficient coverage locations, mostly caused by poor RF signal coverage or insufficient capacity of network equipments, are always a major concern to mobile operators. In the insufficient coverage location, the RF signal quality is poor, or even no RF signal coverage is present. The insufficient coverage location brings many undesirable effects to the mobile network, such as high call setup failure rate, drop call increase, poor voice quality of phone calls, poor data throughput, poor Quality of Service (QoS), etc. These undesirable effects will reduce the customer satisfaction and even increase the customer churn rate, i.e. the customer may change his mobile service provider frequently. Therefore, the mobile operators keep investing money and manpower in different ways to find out the insufficient coverage location in their networks and solve them accordingly. However, most operators are still looking for a systematic and efficient way to solve this problem.

Drive test is a common way used by the mobile operators to find out insufficient c overage locations. Though the RF signal quality can be directly detected during the drive test period, the drive test still has many drawbacks. For example, the mobile operators need to spend a huge amount of testing equipments, time (e.g. several weeks may be spent for one round of drive test in a city) and manpower to perform the drive test and subsequent data analysis. In addition, the drive test is usually performed in non-busy hours to avoid traffic congestion, and is mainly performed in outdoor environment since the access to indoor buildings may be restricted. Therefore, the drive test may fail to detect the insufficient coverage location existed at indoor buildings or in busy hours.

US patent application no. 2007099561 discloses a system and method for providing cell-based statistics for messages related to the same call.

European patent application no. 1711025 discloses an apparatus and method for analyzing data records in a telecommunications network having a radio access network (RAN) portion and a core network (CN) portion.

### SUMMARY OF INVENTION

It is therefore one objective of the present invention to provide a method and system for detecting an insufficient coverage location in a mobile network, thereby detecting the insufficient coverage location in a systematic and efficient way.

Another objective of the present invention is to provide a method and system for detecting an insufficient coverage location in a mobile network, thereby detecting the insufficient coverage location at indoor buildings or in busy hours.

In one embodiment of the present invention, a method for detecting whether or not a registered address of a subscriber is an insufficient coverage location in a mobile network having a plurality of cells is provided. The method comprises: loading a plurality of call detail record (CDR) entries of the subscriber of the mobile network, wherein each of the CDR entries is originally generated to serve as a basis for billing the corresponding subscriber, wherein each of the loaded CDR entries comprises an end cell identifier for indicating an end cell where a corresponding call is ended at and an error code for recording an error if the corresponding call is terminated due to the error; generating a corresponding cell list for the registered address of the subscriber, wherein the registered address is a location address that the subscriber registers to the mobile network, and the cell list comprises at least one cell that potentially covers the registered address; extracting the CDR entries associated with the cell list from the loaded CDR entries, wherein each of the extracted CDR entries comprises the end cell identifier belonging to the cell list; and determining whether the registered address is an insufficient coverage location of the mobile network according to the error codes of the extracted CDR entries.

In an example of the present invention, a method for detecting an insufficient coverage location in a mobile network having a plurality of cells is provided. The method comprises: loading a plurality of call detail record (CDR) entries from the mobile network, wherein each of the loaded CDR entries comprises an end cell identifier for indicating an end cell where a corresponding call is ended at and an error code for recording an error if the corresponding call is terminated due to the error; extracting the CDR entry whose end cell identifier is a first cell in the cells from the loaded CDR entries; and determining whether the first cell contains an insufficient coverage location according to a number of the extracted CDR entries whose error code is coverage-related.

In the embodiment of the present invention, a system for detecting whether or not a registered address of a subscriber is an insufficient coverage location in a mobile network having a plurality of cells is provided. The system comprises: a storing unit for storing a plurality of call detail record (CDR) entries of the subscriber of the mobile network, wherein each of the CDR entries is originally generated to serve as a basis for billing the corresponding subscriber, wherein each of the CDR entries comprises an end cell identifier for indicating an end cell where a corresponding call is ended at and an error code for recording an error if the corresponding call is terminated due to the error; a generating unit for generating a corresponding cell list for the registered address of the subscriber, wherein the registered address is a location address that the subscriber registers to the mobile network, and the cell list comprises at least one cell that potentially covers the registered address; a data filtering unit, coupled to the storing unit and the generating unit, for extracting the CDR entries associated with the cell list from the storing unit, wherein each of the extracted CDR entries comprises the end cell identifier belonging to the cell list; and a determining unit, coupled to the data filtering unit, for determining whether the registered address is an insufficient coverage location of the mobile network according to the error codes of the extracted CDR entries.

### BRIEF DESCRIPTION OF THE DRAWINGS

Fig.1 is a flow chart of the embodiment of a method for detecting an insufficient coverage location in a mobile network having a plurality of cells according to the present invention.
Fig.2 is a flow chart of an example of the method for detecting the insufficient coverage location in the mobile network according to the present invention.
Fig.3 is a flow chart of another example of the method for detecting the insufficient coverage location in the mobile network according to the present invention.
Fig.4 is a block diagram of the embodiment of the system for detecting the insufficient coverage location in the mobile network according to the present invention.

### DETAILED DESCRIPTION

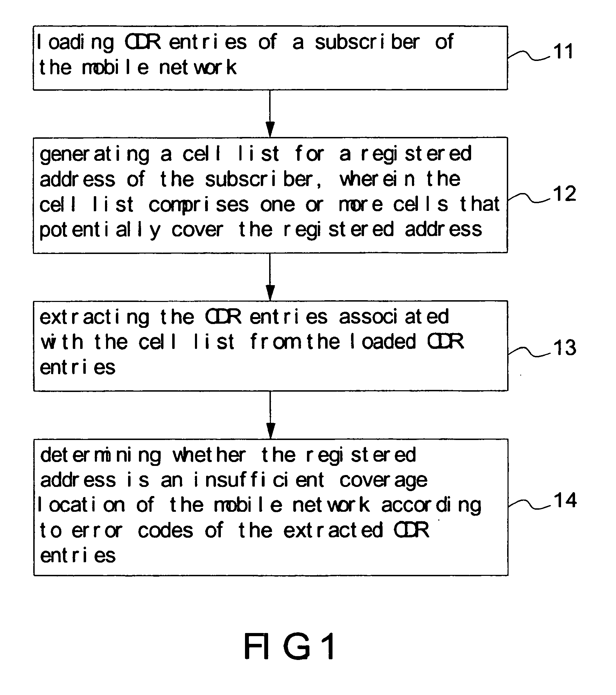

Reference will now to be made in detail to the embodiment of the present invention, which are illustrated in the accompanying drawings. Fig.1 is a flow chart of the embodiment of a method for detecting an insufficient coverage location in a mobile network having a plurality of cells according to the present invention. The mobile network can be any kind of wireless network with a cellular architecture, such as GSM, cdmaOne, PHS, CDMA2000, UMTS, EVDO, LTE, WiMAX networks, etc. In the embodiment, the insufficient coverage location is detected according to call detail records (CDR) of subscribers of the mobile network. When the subscriber makes or receives a call (e.g. a phone call), a corresponding CDR entry is generated to serve as the basis for billing the subscriber. The CDR entry typically contains following information: (1) a phone number of the subscriber; (2) a start cell identifier for indicating a start cell where the corresponding call is made or received at; (3) an end cell identifier for indicating an end cell where the corresponding call is ended at; (4) a start time of the corresponding call; (5) an end time of the corresponding call; and (6) an error code (also known as cause code, clear code or fault code) for recording an error if the corresponding call is terminated due to the error. For some mobile networks, the error code is only generated when an error occurs, while for other mobile networks, the error code is still generated when the corresponding call is normally terminated, so as to indicate that no error occurs. Besides, in some mobile networks, the above item (5) is replaced by a time duration of the corresponding call. The embodiment can combine the CDR data of each subscriber with his registered address so as to find out insufficient coverage locations more precisely. The registered address is an address that the subscriber registers to the mobile network as part of the subscriber profile, and is usually used as the billing address. The basic concept of the embodiment is as follows: the registered address, typically the home or office address of the subscriber, is usually the location that the subscriber makes or receives a call via the mobile network most frequently. On the other hand, by examining the end cell identifier and error code of the CDR entry, it can be determined whether the corresponding call is terminated due to a coverage issue, e.g. an insufficient coverage location within the end cell of the corresponding call. Thus, if CDR entries of a subscriber show that an insufficient coverage location may exist in one or more cells covering the registered address of the subscriber, then it is very possible that the registered address is just the insufficient coverage location. In this manner, the insufficient coverage location can be positioned very precisely.

Next, the embodiment is described in detail with respect to Fig.1. In step 11, a plurality of CDR entries of a subscriber are loaded from the mobile network. In step 12, a cell list is generated for a registered address of the subscriber. The cell list comprises one or more cells that potentially cover the registered address. The cell list can be generated by looking up the coverage map of the mobile network, which displays the coverage area of each cell on a map. The registered address can be represented in terms of latitude and longitude by referring to Geographical Information System (GIS). If floor information is available in the registered address, the registered address can be represented more precisely in terms of latitude, longitude and altitude.

In step 13, the CDR entries associated with the cell list are extracted from the CDR entries loaded in step 11. Each of the extracted CDR entries comprises the end cell identifier belonging to the cell list.

In step 14, it is determined whether the registered address is an insufficient coverage location of the mobile network according to the error codes of the extracted CDR entries. Firstly, a coverage-related error rate for the registered address is computed according to the error codes of the extracted CDR entries. For instance, the coverage-related error rate can be equal to the number of the extracted CDR entries whose error code is coverage-related divided by the total number of the extracted CDR entries. A CDR entry containing a coverage-related error code means that the corresponding call is terminated due to a coverage issue, which may imply the presence of an insufficient coverage location. For example, in the 3GPP RANAP (Radio Access Network Application Protocol) specification, cause code 14 (Failure in the Radio Interface Procedure), cause code 15 (Release due to UTRAN Generated Reason), and cause code 46 (Radio Connection With User Equipment Lost) are some examples of the coverage-related error code. Thus, the higher the coverage-related error rate is, the more possible the registered address is an insufficient coverage location. Secondly, it is determined whether the registered address is the insufficient coverage location according to the coverage-related error rate. For example, if the coverage-related error rate for the registered address is higher than a first threshold, then the registered address is determined as the insufficient coverage location. The first threshold is configurable so as to meet different QoS requirements of the mobile network. If the mobile network has a higher QoS requirement, then the first threshold can be set to a higher value.

Compared with the conventional drive test, the embodiment in Fig.1 has the following advantages:
(1) Discover precise insufficient coverage locations with much less efforts: the embodiment can detect the insufficient coverage location to an accuracy of street address level, without need to spend lots of efforts as the conventional drive test.
(2) Discover indoor insufficient coverage locations: the conventional drive test fails to find indoor insufficient coverage locations since the access to indoor buildings may be restricted, while the insufficient coverage location detected by the embodiment (i.e. the registered address) is usually an indoor location.
(3) Temporal advantage: the conventional drive test collects data and discovers insufficient coverage locations only during the time period when the drive test is performed, while the embodiment has no such temporal restriction, as long as there are CDR data generated during the time period to be analyzed.
(4) Spatial advantage: the conventional drive test collects data and discovers insufficient coverage locations only in areas where the drive test is performed, while the embodiment has no such spatial restriction, as long as there are CDR data associated with the area to be analyzed.
(5) Discover insufficient coverage locations caused by insufficient capacity of network equipments: the conventional drive test is hard to discover the insufficient coverage locations caused by insufficient capacity of network equipments since the drive test is usually performed during non-busy hours. For example, the cell breathing effect in CDMA-based networks, i.e. the coverage of a cell with insufficient capacity shrinks with larger data traffic and swells with less data traffic, may cause insufficient coverage locations during busy hours. The embodiment can detect such kind of insufficient coverage locations as long as the CDR data during the busy hours are available.

Since the embodiment can provide precise insufficient coverage locations, especially indoor ones, the network operators will have better understanding of their networks' coverage issues, and then adopt different strategies to solve the discovered insufficient coverage locations. For example, if the discovered insufficient coverage location resides in an office building, the network operator can add a new site, such as a picocell, or install repeaters in proper locations to complete the coverage; if the found insufficient coverage location resides in a residential building, the network operator can recommend femtocell installation accordingly, or build a new site if necessary.

The embodiment can also be applied to a hybrid mobile network implemented based on multiple radio access technologies (RAT). For example, the hybrid mobile network may include a first sub-network formed by plural first cells implemented based on a first RAT, and a second sub-network formed by plural second cells implemented based on a second RAT. The first and second sub-networks can be a GSM network and a UMTS network respectively. How the embodiment is applied to the hybrid mobile network is described below. Please refer to Fig.1 again. In step 12, the cell list comprises a first cell list and a second cell list. The first cell list includes at least one of the first cells, and the second cell list includes at least one of the second cells. In step 13, the extracted CDR entries comprise a first group and a second group of CDR entries. Each CDR entry in the first group comprises the end cell identifier belonging to the first cell list, while each CDR entry in the second group comprises the end cell identifier belonging to the second cell list. In step 14, according to the error codes of the first group of CDR entries, it can be determined whether the registered address is an insufficient coverage location of the first sub-network. Similarly as mentioned above, a first coverage-related error rate for the registered address can be computed according to the error codes of the first group of CDR entries, and it can be determined whether the registered address is the insufficient coverage location of the first sub-network according to the first coverage-related error rate. Similarly, according to the error codes of the second group of CDR entries, it can be determined whether the registered address is an insufficient coverage location of the second sub-network.

In the above hybrid mobile network, the subscriber may be required to access one of the first and second sub-networks first if the subscriber needs any network service. For example, if the first and second sub-networks are a GSM network and a UMTS network respectively and also if the subscriber registers to the hybrid network as a UMTS user, then the second sub-network is prioritized for the subscriber to access first. If the service of the second sub-network is not available, the subscriber is allowed to access the first sub-network instead. In this situation, the embodiment further comprises a step (not shown in Fig.1) for determining whether the registered address of the subscriber is an insufficient coverage location of the second sub-network according to the number of the CDR entries loaded in step 11 whose start cell identifiers belong to the first cell list. If this number is large (e.g. larger than a predetermined value), it means that although the subscriber is required to access the second sub-network first, he in fact accesses the first sub-network more frequently, that is, it is very possible that the second sub-network has an insufficient coverage location at the registered address.

Besides, in the case of the above hybrid network, if each CDR entry also contains a handover information for recording a handover sequence from the start cell to the end cell, then the handover information can be used to detect the insufficient coverage location of the first or second sub-network. If the end cell is the same as the start cell, then no handover occurs in the corresponding call and the handover information is none; if the corresponding call is handed over from the start cell directly to the end cell, then the handover sequence just contains the start cell and the end cell in order; if the corresponding call is handed over from the start cell to the end cell via one or more intermediate cells, then the handover sequence contains the start cell, the intermediate cell(s), and the end cell in order. In this situation, the embodiment further comprises a step (not shown in Fig.1) for determining whether the registered address of the subscriber is an insufficient coverage location of the second sub-network according to the number of the CDR entries loaded in step 11 whose handover information shows that a cell and its next cell in the handover sequence belong to the second cell list and the first cell list respectively. If this number is large (e.g. larger than a predetermined value), it implies that when the subscriber makes, receives or maintains a call at the registered address, the call is often handed over from the second sub-network to the first sub-network, that is, it is very possible that the second sub-network has an insufficient coverage location at the registered address.

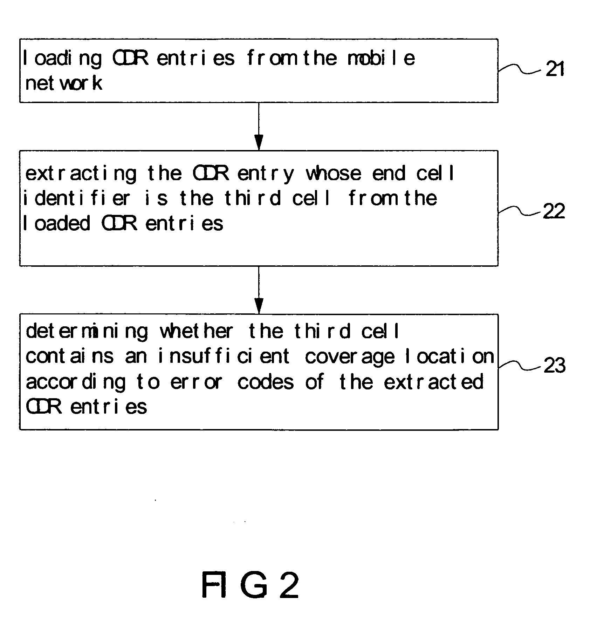

Fig.2 is a flow chart of an example of the method for detecting the insufficient coverage location in the mobile network according to the present invention. In the example, the insufficient coverage location is also detected according to CDR data, while the CDR data is used in a little different way from the first embodiment. The basic concept of the example is as follows: by examining the end cell identifier and error code of a CDR entry, it can be determined whether the corresponding call is terminated due to a coverage issue, e.g. an insufficient coverage location within the end cell of the corresponding call. Thus, if each of a certain amount of CDR entries with the same end cell identifier has a coverage-related error code, then it is very possible that an insufficient coverage location exists in this end cell.

Next, the example is described in detail with respect to Fig.2. In step 21, a plurality of CDR entries are loaded from the mobile network. In step 22, any CDR entry whose end cell identifier is a certain cell (denoted as the third cell below) is extracted from the CDR entries loaded in step 21. In step 23, it is determined whether the third cell contains an insufficient coverage location according to the error codes of the CDR entries extracted in step 22. More specifically, a ratio is first computed by dividing the number of the extracted CDR entries whose error code is coverage-related by the total number of the extracted CDR entries. Then, if the ratio is higher than a second threshold, it means that a call maintained by the third cell is very probable to be terminated due to a coverage issue, that is, the third cell can be determined to contain the insufficient coverage location. Furthermore, the higher the ratio is, the more serious the insufficient coverage location becomes. The second threshold is configurable so as to meet different QoS requirements of the mobile network.

By means of the RF propagation model, it can be derived that the more distant a location is away from the center of a cell, the weaker the RF signal strength is at the location. Thus, if the third cell is determined to contain the insufficient coverage location in step 23, then the insufficient coverage location is very likely to appear in the outer coverage area of the third cell. In this manner, the insufficient coverage location can be positioned more accurately.

Furthermore, if each of the CDR entries loaded in step 21 comprises a handover cell identifier for indicating a handover cell from which the corresponding call has been handed over to the end cell (i.e. the corresponding call is handed over to the end cell from the handover cell), then the example can further detect an insufficient coverage location between a cell pair. More specifically, if the loaded CDR entries show that the probability of handover failure between the cell pair is high, it can be determined that the insufficient coverage location exists between the cell pair, i.e. within the overlapping coverage area of the cell pair. For example, if the cell pair contains a fourth cell and a fifth cell, the CDR entries whose end cell identifier and handover cell identifier are the fourth cell and the fifth cell respectively (or the fifth cell and the fourth cell respectively) can be first extracted from the CDR entries loaded in step 21. Then, a ratio is computed by dividing the number of the extracted CDR entries whose error code is handover-related by the total number of the extracted CDR entries. A CDR entry containing a handover-related error code means that the corresponding call is terminated due to a handover failure. If the above ratio is higher than a third threshold, it means that the handover between the fourth and fifth cells is very probable to fail, that is, it can be determined that the insufficient coverage location exists between the fourth and fifth cells. The third threshold is configurable so as to meet different QoS requirements of the mobile network.

It should be noted that in the embodiment and example, any kind of data which is provided by the mobile network and contains CDR-like information can also be used for detecting the insufficient coverage location. For example, call detail logs (CDL) in CDMA-based networks or mobile measurement reports (MMR) contains more than CDR-like information, so the CDR-like information can be extracted from CDL or MMR data for use in the first embodiment and example.

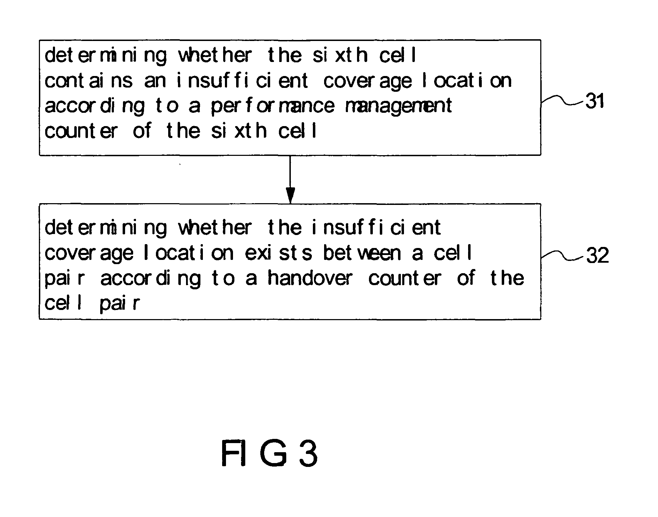

Fig.3 is a flow chart of another example of the method for detecting the insufficient coverage location in the mobile network according to the present invention. In this example, the insufficient coverage location is detected according to performance management counters of the mobile network, which can provide statistic data about the operation status of the mobile network. Step 31 can determine whether an insufficient coverage location exists within a cell, while step 32 can determine whether the insufficient coverage location exists between a cell pair, i.e. exists within the overlapping coverage area of the cell pair. More specifically, in step 31, it is determined whether a certain cell (denoted as the sixth cell below) contains an insufficient coverage location according to a performance management counter of the sixth cell, where the performance management counter can be a call drop counter and a call setup failure counter. If the value of the call drop counter or the call setup failure counter of the sixth cell is higher than a fourth threshold (which is configurable to meet different QoS requirements), it means that RF signal quality within the coverage of the sixth cell is poor and thus the sixth cell may contain an insufficient coverage location. Furthermore, a ratio of the value of the call drop counter to the total amount of calls maintained by the sixth cell, or a ratio of the value of the call setup failure counter to the total amount of call attempts initiated via the sixth cell can be used to indicate the seriousness of the insufficient coverage location in the sixth cell, that is, the higher the ratio is, the more serious the insufficient coverage location is. Furthermore, according to the RF propagation model, if the sixth cell is determined to contain the insufficient coverage location, then the insufficient coverage location is very likely to appear in the outer coverage area of the sixth cell.

In step 32, it is determined whether an insufficient coverage location exists between a cell pair according to a handover counter for recording handover-related statistic data between the cell pair. The handover counter is a kind of performance management counters, and the handover-related statistic data comprises a number of times of handover attempts or handover failures between the cell pair. If the number of times of handover attempts or handover failures between the cell pair is higher than a fifth threshold (which is configurable to meet different QoS requirements), it means that RF signal quality within the overlapping coverage area of the cell pair is poor and thus an insufficient coverage location may exists between the cell pair.

In the example, if the mobile network is a hybrid network implemented based on multiple radio access technologies (RAT), then the statistic data about Inter-RAT handover can be used for detecting the insufficient coverage location. For instance, network operators who are rolling out a network built based on a new RAT (such as UMTS, CDMA 2000, EVDO, LTE, WiMAX, etc.) on top of their existing network (such as GSM, cdmaOne, PHS, etc.) usually allow the handover from the new network to the existing network to make up the poor coverage of newly rolled out network. Therefore, handover counters for recording this kind of Inter-RAT handovers can be used to enhance the detection of the insufficient coverage location in this situation. For example, UMTS to GSM handovers are usually available in a GSM/UMTS co-existing network to ensure that calls can be continued or can be made if users travel to areas with poor UMTS network coverage, and corresponding Inter-RAT handover counters are used to record the number of times of UMTS to GSM handovers. In this situation, if a UMTS cell has high Inter-RAT handovers to one or more GSM cells, it means this UMTS cell may have a coverage problem. A ratio for identifying the problematic UMTS cell can be computed by dividing the number of times of Inter-RAT handovers to GSM cell(s) from a UMTS cell by the total number of times of handovers from the UMTS cell. Then, if the ratio is higher than a sixth threshold (which is also configurable), it means that this UMTS cell may have an insufficient coverage location such that a call maintained by the UMTS cell is very probable to be handed over to a GSM cell. Similar techniques can be applied to a network implemented based on different frequencies where Inter-Frequency handovers are allowed, such as a GSM 900 and GSM 1800 co-existing network, so as to identify problematic cells.

After identifying the problematic UMTS cells in the GSM/UMTS co-existing network as mentioned above, a problematic cell pair where an insufficient coverage location may exist therebetween can be further identified by checking the proportion of total UMTS to GSM handovers occupied by each neighboring GSM cell of the problematic UMTS cell. If the proportion of total UMTS to GSM handovers occupied by a certain neighboring GSM cell of the problematic UMTS cell is much higher than those occupied by other neighboring GSM cells, then an insufficient coverage location may exist between the cell pair containing this certain neighboring GSM cell and the problematic UMTS cell.

The first example detects the insufficient coverage location according to CDR data, while the second example detects the insufficient coverage location according to performance management counters. It is notable that the examples can be combined together to detect the insufficient coverage location more accurately by cross validation. Also, the examples can help to perform the conventional drive test more efficiently. That is, problematic cells or cell pairs can be first identified by the example. Then, the drive test can be performed within the identified problematic cells or cell pairs only, so as to prevent from wasting resources in non-problematic cells or cell pairs. Furthermore, the identified problematic cells or cell pairs with high seriousness can be performed the drive test in top priority, so as to increase the efficiency of the drive test.

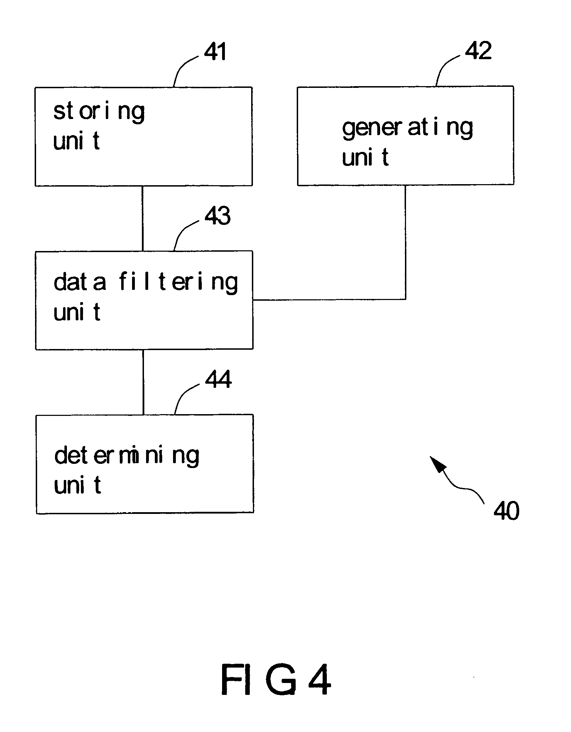

Fig.4 is a block diagram of the embodiment of the system for detecting the insufficient coverage location in the mobile network according to the present invention, where the system 40 comprises a storing unit 41, a generating unit 42, a data filtering unit 43 and a determining unit 44. The storing unit 41 stores a plurality of CDR entries of a subscriber of the mobile network. The generating unit 42 generates a corresponding cell list for a registered address of the subscriber, where the cell list comprises at least one cell that potentially covers the registered address. The data filtering unit 43 is coupled to the storing unit 41 and the generating unit 42, and extracts the CDR entries associated with the cell list from the storing unit 41. Each extracted CDR entry comprises the end cell identifier belonging to the cell list. The determining unit 44 is coupled to the data filtering unit 43, and determines whether the registered address is an insufficient coverage location of the mobile network according to the error codes of the extracted CDR entries. Preferably, the determining unit 44 first computes a coverage-related error rate for the registered address according to the error codes of the extracted CDR entries, for example, the coverage-related error rate can be equal to the number of the extracted CDR entries whose error code is coverage-related divided by the total number of the extracted CDR entries. Then, the determining unit 44 determines whether the registered address is the insufficient coverage location according to the coverage-related error rate. For example, if the coverage-related error rate for the registered address is higher than the first threshold mentioned above, then the registered address is determined as the insufficient coverage location.

It should be noted that the above embodiment and examples can also be applied to a mobile network comprising plural cellular network units other than cells, such as sectors (for CDMA networks), Node B (for UMTS networks), Access Points (for WiMAX networks), etc. The cellular network unit can also be finer than a cell if enough information is recorded. For example, if the cell identifier and Timing Advance value are both available, the cellular network unit can be "cell identifier + Timing Advance value", which is finer than a cell.

It should also be noted that in the above embodiment and examples "handover" may be replaced by other terms, such as handoff, cell update, cell change, etc., in different kinds of mobile networks.

While the present invention has been shown and described with reference to the preferred embodiments thereof and the illustrative drawings, it should not be considered as limited thereby. Various possible modifications and alterations can be conceived by persons skilled without departing from the scope of the present invention as set forth in the appended claims.

## Claims

1. A method for detecting whether or not a registered address of a subscriber is an insufficient coverage location in a mobile network having a plurality of cells, the method comprising:
loading (11) a plurality of call detail record CDR entries of the subscriber of the mobile network, wherein each of the CDR entries is originally generated to serve as a basis for billing the corresponding subscriber, wherein each of the loaded CDR entries comprises an end cell identifier for indicating an end cell where a corresponding call is ended at and an error code for recording an error if the corresponding call is terminated due to the error;
generating (12) a corresponding cell list for the registered address of the subscriber, wherein the registered address is a location address that the subscriber registers to the mobile network, and the cell list comprises at least one cell that potentially covers the registered address;
extracting (13) from the loaded CDR entries the CDR entries whose end cell identifiers belong to the cell list; and
determining (14) whether the registered address is the
insufficient coverage location of the mobile network according to the error codes of the extracted CDR entries.

2. The method of claim 1, wherein the determining step comprises:
computing a coverage-related error rate for the registered address according to a number of the extracted CDR entries whose error code is coverage-related; and
determining whether the registered address is the insufficient coverage location according to the coverage-related error rate.

3. The method of claim 2, wherein the coverage-related error rate for the registered address is computed by dividing the number of the extracted CDR entries whose error code is coverage-related by a total number of the extracted CDR entries.

4. The method of claim 1, wherein the plurality of cells comprises a plurality of first cells, which form a first sub-network of the mobile network; the cell list comprises a first cell list including at least one of the first cells, and the extracted CDR entries comprise a first group of CDR entries, each of which comprises the end cell identifier belonging to the first cell list; the determining step comprises:
determining whether the registered address is the insufficient coverage location of the first sub-network according to the error codes of the first group of CDR entries.

5. The method of claim 1, wherein each of the loaded CDR entries further comprises a start cell identifier for indicating a start cell where the corresponding call is made or received at; the plurality of cells comprises a plurality of first cells and second cells; the first cells and the second cells form a first sub-network and a second sub-network of the mobile network respectively; the cell list comprises a first cell list including at least one of the first cells and a second cell list including at least one of the second cells; if the second sub-network is prioritized for the subscriber to access first, then the method further comprises:
determining whether the registered address is the insufficient coverage location of the second sub-network according to a number of the loaded CDR entries whose start cell identifiers belong to the first cell list.

6. The method of claim 5, wherein if each of the loaded CDR entries further comprises a handover information for recording a handover sequence from the start cell to the end cell, then the method further comprises:
determining whether the registered address is the insufficient coverage location of the second sub-network according to a number of the loaded CDR entries whose handover information shows that a cell and its next cell in the handover sequence belong to the second cell list and the first cell list respectively.

7. A system for detecting whether or not a registered address of a subscriber is an insufficient coverage location in a mobile network having a plurality of cells, the system comprising:
a storing unit (41) for storing a plurality of call detail record CDR entries of the subscriber of the mobile network, wherein each of the CDR entries is originally generated to serve as a basis for billing the corresponding subscriber, wherein each of the CDR entries comprises an end cell identifier for indicating an end cell where a corresponding call is ended at and an error code for recording an error if the corresponding call is terminated due to the error;
a generating unit (42) for generating a corresponding cell list for the registered address of the subscriber, wherein the registered address is a location address that the subscriber registers to the mobile network, and the cell list comprises at least one cell that potentially covers the registered address;
a data filtering unit (43), coupled to the storing unit and the generating unit, for extracting the CDR entries associated with the cell list from the storing unit, wherein each of the extracted CDR entries comprises the end cell identifier belonging to the cell list; and
a determining unit (44), coupled to the data filtering unit, for determining whether the registered address is the insufficient coverage location of the mobile network according to the error codes of the extracted CDR entries.

## Patentansprüche

1. Verfahren zum Bestimmen, ob eine registrierte Adresse eines Teilnehmers ein unzureichender Netzabdeckungsstandort in einem eine Vielzahl von Zellen aufweisenden mobilen Netzwerk ist oder nicht, wobei das Verfahren umfasst:
Laden (11) einer Vielzahl von Anrufdetailaufzeichnungs-CDR-Einträge des Teilnehmers des mobilen Netzwerkes, wobei die CDR-Einträge des Teilnehmers ursprünglich erzeugt wird, um als Basis zur Abrechnung des entsprechenden Teilnehmers zu dienen, wobei jeder der geladenen CDR-Einträge eine Endzellenkennung zur Bezeichnung einer Endzelle, in der ein entsprechender Anruf endet, und einen Fehlerkode zur Aufzeichnung eines Fehlers, wenn der Anruf infolge eines Fehlers beendet wird, enthält.
Erzeugen (12) einer entsprechenden Zellenliste für die registrierte Adresse des Teilnehmers, wobei die registrierte Adresse eine Standortadresse ist, die der Teilnehmer zum mobilen Netzwerk registriert, und die Zellenliste wenigstens eine Zelle enthält, die die registrierte Adresse potentiell abdeckt,
Entnehmen (13) der CDR-Einträge aus den geladenen CDR-Einträgen, dessen Endzellenkennungen der Zellenliste angehören, und
Bestimmen (14), ob die registrierte Adresse gemäß den Fehlerkodes der entnommenen CDR-Einträge der unzureichende Netzabdeckungsstandort des mobilen Netzwerkes ist.

2. Verfahren nach Anspruch 1, bei dem der Bestimmungsschritt umfasst:
Berechnen einer abdeckungsbezogenen Fehlerrate für die registrierte Adresse gemäß einer Zahl von entnommenen CDR-Einträgen, deren Fehlerkode abdeckungsbezogen sind, und
Bestimmen, ob die registrierte Adresse gemäß der abdeckungsbezogenen Fehlerrate der unzureichende Netzabdeckungsstandort ist.

3. Verfahren nach Anspruch 2, bei dem die abdeckungsbezogene Fehlerrate für die registrierte Adresse durch Dividieren der Zahl der entnommenen CDR-Einträge, deren Fehlerkode abdeckungsbezogen ist, durch eine Gesamtzahl an entnommenen CDR-Einträgen berechnet wird.

4. Verfahren nach Anspruch 1, bei dem die Vielzahl von Zellen eine Vielzahl von ersten Zellen umfasst, die ein erstes Subnetzwerk des mobilen Netzwerks bilden, wobei die Zellenliste eine erste Zellenliste umfasst, die wenigstens eine der ersten Zellen enthält, und die entnommenen CDR-Einträge eine erste Gruppe von CDR-Einträgen umfasst, die jeweils die Endzellenkennung umfassen, der zur ersten Zellenliste angehören, wobei der Bestimmungsschritt umfasst:
Bestimmen, ob die registrierte Adresse gemäß den Fehlerkodes der ersten Gruppe von CDR-Einträgen der unzureichende Netzabdeckungsstandort des ersten Subnetzwerkes ist.

5. Verfahren nach Anspruch 1, bei dem jeder der geladenen CDR-Einträge ferner eine Startzellenkennung umfasst zur Angabe einer Startzelle, in der der entsprechende Anruf gemacht oder angenommen wird, wobei die Vielzahl von Zellen eine Vielzahl von ersten Zellen und zweiten Zellen umfasst, wobei die ersten Zellen und die zweiten Zellen jeweils ein erstes Subnetzwerk und ein zweites Subnetzwerk des mobilen Netzwerkes bilden, wobei die Zellenliste eine wenigstens eine der ersten Zellen enthaltende erste Zellenliste und eine wenigstens eine der zweiten Zellen enthaltende zweite Zellenliste umfasst, wobei, wenn das zweite Subnetzwerk für den Teilnehmer zum ersten Zugriff priorisiert wird, das Verfahren dann ferner umfasst:
Bestimmen, ob die registrierte Adresse gemäß einer Zahl von geladenen CDR-Einträgen, deren Startzellenkennung der ersten Zellenliste angehört, der unzureichende Netzabdeckungsstandort des zweiten Subnetzwerkes ist.

6. Verfahren nach Anspruch 5, bei dem, wenn jede der geladenen CDR-Einträge ferner eine Übergabeinformation zur Aufzeichnung einer Übergabesequenz von der Startzelle zur Endzelle umfasst, das Verfahren dann ferner umfasst:
Bestimmen, ob die registrierte Adresse gemäß einer Zahl von geladenen CDR-Einträgen, deren Übergabeinformation zeigt, dass eine Zelle und ihre nächste Zelle in der Übergabesequenz der zweiten Zellenliste beziehungsweise der ersten Zellenliste angehören, der unzureichende Netzabdeckungsstandort des zweiten Subnetzwerkes ist.

7. System zum Bestimmen, ob eine registrierte Adresse eines Anschlussinhabers ein unzureichender Netzwerkabdeckungsstandort in einem eine Vielzahl von Zellen aufweisenden mobilen Netzwerk ist oder nicht, wobei das System enthält:
eine Speichereinheit (41) zum Speichern einer Vielzahl von Anrufdetailaufzeichnungs-CDR-Einträge des Teilnehmers des mobilen Netzwerkes, wobei die CDR-Einträge des Teilnehmers ursprünglich erzeugt wird, um als Basis zur Abrechnung des entsprechenden Teilnehmers zu dienen, wobei jeder der geladenen CDR-Einträge eine Endzellenkennung zur Bezeichnung einer Endzelle, in der ein entsprechender Anruf endet, und einen Fehlerkode zur Aufzeichnung eines Fehlers, wenn der Anruf infolge eines Fehlers beendet wird, enthält.
eine Erzeugungseinheit (42) zum Erzeugen einer entsprechenden Zellenliste für die registrierte Adresse des Teilnehmers, wobei die registrierte Adresse eine Standortadresse ist, die der Teilnehmer zum mobilen Netzwerk registriert, und die Zellenliste wenigstens eine Zelle enthält, die die registrierte Adresse potentiell abdeckt,
eine Datenfilterungseinheit (43), die mit der Speichereinheit und der Erzeugungseinheit verbunden ist, zum Entnehmen der mit der Zellenliste assoziierten CDR-Einträge aus der Speichereinheit, wobei jeder der entnommenen CDR-Einträge die Endzellenkennungen enthält, die der Zellenliste angehört,
eine Bestimmungseinheit (44), die mit der Datenfilterungseinheit verbunden ist, zum Bestimmen, ob die registrierte Adresse gemäß den Fehlerkodes der entnommenen CDR-Einträge der unzureichende Netzabdeckungsstandort des mobilen Netzwerkes ist.

## Revendications

1. Procédé permettant de détecter si une adresse enregistrée d'un abonné est ou n'est pas un emplacement dont la couverture est insuffisante dans un réseau mobile ayant une pluralité de cellules, le procédé comprenant les étapes consistant à :
charger (11) une pluralité d'entrées d'enregistrements de détails d'appel EDA de l'abonné du réseau mobile, dans lequel chacune des entrées EDA est générée à l'origine pour servir de base de facturation de l'abonné correspondant, dans lequel chacune des entrées EDA chargées comprend un identifiant de cellule de fin permettant d'indiquer une cellule de fin où un appel correspondant se termine et un code d'erreur permettant d'enregistrer une erreur si l'appel correspondant s'est terminé en raison de l'erreur ;
générer (12) une liste de cellules correspondante pour l'adresse enregistrée de l'abonné, dans lequel l'adresse enregistrée est une adresse d'emplacement que l'abonné enregistre dans le réseau mobile, et la liste de cellules comprend au moins une cellule qui couvre potentiellement l'adresse enregistrée ;
extraire (13) des entrées EDA chargées les entrées EDA dont les identifiants de cellules de fin appartiennent à la liste de cellules ; et
déterminer (14) si l'adresse enregistrée est l'emplacement dont la couverture est insuffisante du réseau mobile selon les codes d'erreur des entrées EDA extraites.

2. Procédé selon la revendication 1, dans lequel l'étape de détermination comprend les sous-étapes consistant à :
calculer un taux d'erreur liée à la couverture pour l'adresse enregistrée selon un certain nombre des entrées EDA extraites dont le code d'erreur est lié à la couverture ; et
déterminer si l'adresse enregistrée est l'emplacement dont la couverture est insuffisante selon le taux d'erreur liée à la couverture.

3. Procédé selon la revendication 2, dans lequel le taux erreur liée à la couverture pour l'adresse enregistrée est calculé en divisant le nombre des entrées EDA extraites dont le code d'erreur est lié à la couverture par un nombre total des entrées EDA extraites.

4. Procédé selon la revendication 1, dans lequel la pluralité de cellules comprend une pluralité de premières cellules, qui forment un premier sous-réseau du réseau mobile ; la liste de cellules comprend une première liste de cellules comprenant au moins une des premières cellules, et les entrées EDA extraites comprennent un premier groupe d'entrées EDA, chacune desquelles comprend l'identifiant de cellule de fin appartenant à la première liste de cellules ; l'étape de détermination comprenant les sous-étapes consistant à :
déterminer si l'adresse enregistrée est l'emplacement dont la couverture est insuffisante du premier sous-réseau selon les codes d'erreur du premier groupe d'entrées EDA.

5. Procédé selon la revendication 1, dans lequel chacune des entrées EDA chargées comprend en outre un identifiant de cellule de départ permettant d'indiquer une cellule de départ où l'appel correspondant est émis ou reçu ; la pluralité de cellules comprend une pluralité de premières cellules et de secondes cellules ; les premières cellules et les secondes cellules forment un premier sous-réseau et un second sous-réseau du réseau mobile respectivement ; la liste de cellules comprend une première liste de cellules comprenant au moins une des premières cellules et une seconde liste de cellules comprenant au moins une des secondes cellules ; si le second sous-réseau est hiérarchisé pour que l'abonné y accède le premier, alors le procédé comprend en outre les étapes consistant à :
déterminer si l'adresse enregistrée est l'emplacement dont la couverture est insuffisante du second sous-réseau selon un nombre des entrées EDA chargées dont les identifiants de cellule de départ appartiennent à la première liste de cellules.

6. Procédé selon la revendication 5, dans lequel si chacune des entrées EDA chargées comprend en outre des informations de transfert intercellulaire permettant d'enregistrer une séquence de transfert intercellulaire depuis la cellule de départ à la cellule de fin, alors le procédé comprend en outre les étapes consistant à :
déterminer si l'adresse enregistrée est l'emplacement dont la couverture est insuffisante du second sous-réseau selon un certain nombre des entrées EDA chargées dont les informations de transfert intercellulaire indiquent qu'une cellule et sa cellule suivante dans la séquence de transfert intercellulaire appartiennent à la seconde liste de cellules et à la première liste de cellules respectivement.

7. Système permettant de détecter si une adresse enregistrée d'un abonné est ou n'est pas un emplacement dont la couverture est insuffisante dans un réseau mobile ayant une pluralité de cellules, le système comprenant :
une unité de stockage (41) permettant de stocker une pluralité d'entrées d'enregistrement de détails d'appel EDA de l'abonné du réseau mobile, dans lequel chacune des entrées EDA est à l'origine générée pour servir de base de facturation de l'abonné correspondant, dans lequel chacune des entrées EDA comprend un identifiant de cellule de fin permettant d'indiquer une cellule de fin où un appel correspondant se termine et un code d'erreur permettant d'enregistrer une erreur si l'appel correspondant se termine en raison de l'erreur ;
une unité de génération (42) permettant de générer une liste d'appels correspondante pour l'adresse enregistrée de l'abonné, dans lequel l'adresse enregistrée est une adresse d'emplacement que l'abonné enregistre dans le réseau mobile, et la liste de cellules comprend au moins une cellule qui couvre potentiellement l'adresse enregistrée ;
une unité de filtrage de données (43), couplée à l'unité de stockage et à l'unité de génération, permettant d'extraire les entrées EDA associées à la liste de cellules en provenance de l'unité de stockage, dans lequel chacune des entrées EDA extraites comprend l'identifiant de cellule de fin appartenant à la liste de cellules ; et
une unité de détermination (44), couplée à l'unité de filtrage de données, permettant de déterminer si l'adresse enregistrée est l'emplacement dont la couverture est insuffisante du réseau mobile selon les codes d'erreur des entrées EDA extraites.
